# EUROPÄISCHE PATENTSCHRIFT

(11) **EP 1 571 065 B1**
(45) Veröffentlichungstag und Bekanntmachung des Hinweises auf die Patenterteilung: **02.05.2007**
(21) Anmeldenummer: 05002858.8
(22) Anmeldetag: 11.02.2005
(51) Int. Cl.: B62D 3/12

(54) **Zahnstangenlenkung für Kraftfahrzeuge**
Rack-and-pinion steering gear for motor vehicles
Direction à crémaillère pour véhicules à moteur

(30) Priorität: 05.03.2004 DE 102004010821
(43) Veröffentlichungstag der Anmeldung: 07.09.2005
(73) Patentinhaber: Schaeffler KG, 91074 Herzogenaurach (DE)
(72) Erfinder: Osterlänger, Jürgen, 91448 Emskirchen (DE); Zernickel, Alexander, 91074 Herzogenaurach (DE); Kraus, Manfred, Dr., 91074 Herzogenaurach (DE); Willared, Stefan, 91352 Pautzfeld (DE)

(56) Entgegenhaltungen:
- EP-A- 0 499 135
- DE-A1- 2 913 641
- DE-A1- 19 726 697
- DE-U1- 8 203 943
- GB-A- 1 168 191
- US-A- 4 322 986

## Beschreibung

### Anwendungsgebiet der Erfindung

Die Erfindung betrifft eine Zahnstangenlenkung für ein Kraftfahrzeug, mit einem Lenkgehäuse, in dem eine Zahnstange längsverschieblich gelagert ist, sowie einem mit der Zahnstange kämmenden Ritzel und einem Druckstück, das auf einer einer Eingriffsseite mit dem Ritzel gegenüberliegenden Seite der Zahnstange angeordnet ist und mit Hilfe einer Feder gegen die Zahnstange vorgespannt ist, wobei das Druckstück in seinem Inneren eine der Kontur der Zahnstange angepaßte, drehbare Führungsrolle mit einer Tragfläche aufweist, an der die Zahnstange mit einer korrespondierenden Tragfläche anliegt, wobei die Tragflächen so zueinander angeordnet sind, dass ein Verdrehen der Zahnstange in Umfangsrichtung verhindert ist.

### Hintergrund der Erfindung

Derartige Zahnstangenlenkungen sind aus dem Stand der Technik seit längerem vorbekannt. Bei diesen Lenkungen wird die Zahnstange in Längsrichtung verschiebbar in einem Lenkgehäuse geführt. Ein in dem Lenkgehäuse drehbar gelagertes Ritzel greift in die Verzahnung der Zahnstange ein und bewirkt bei Drehung der mit dem Ritzel drehfest verbundenen Lenksäule die seitliche Verlagerung der Zahnstange, die wiederum über Spurstangen und Achsschenkel zu einer Verschwenkung der gelenkten Räder des Kraftfahrzeuges führt. Der Eingriff des Ritzels in die Zahnstange wird spielfrei gehalten, indem ein gegenüber dem Ritzel an der Zahnstange anliegendes Druckstück unter Vorspannung die Zahnstange gegen das Ritzel drückt. Das Druckstück muß dabei zum einen die erforderliche Anpreßkraft übertragen können und zum anderen eine Lagerfläche bieten, die bei der Verschiebung der Zahnstange auf dem Druckstück keine nennenswerten Reibkräfte und keinen wesentlichen Verschleiß hervorruft. Wird nun die über das Ritzel von der Hand des Fahrers aufgebrachte Lenkkraft durch einen Kugelgewindetrieb verstärkt, so wird durch die Momentübertragung die Zahnstange versucht sein, sich über ihre axiale Länge in Umfangsrichtung zu verdrehen. Dies versucht man dadurch zu verhindern, indem die Tragflächen von Führungsrolle und Zahnstange so zueinander angeordnet sind, dass sie sich einem Verdrehen der Zahnstange entgegen stellen.

Eine derartige Zahnstangenlenkung ist aus der gattungsgemäßen DE 82 03 943 U bekannt. Wie Figur 5 dieser Vorveröffentlichung zeigt, weist die Zahnstange zwei Tragflächen auf, die symmetrisch gegen die Verzahnungsebene geneigt sind. Zur Zahnstangenlenkung gehört weiter eine Führungsrolle, die in einem Druckstück angeordnet ist und ebenfalls zwei Tragflächen aufweist. Die Tragflächen der Zahnstange werden durch spanenden Materialabtrag der im Ausgangszustand runden Zahnstange erzeugt. Die Tragflächen der Führungsrolle werden durch zwei im Druckstück angeordnete Außenringe eines Kugellagers gebildet, deren Mantelflächen, die die Tragflächen bilden, ebenfalls symmetrisch geneigt gegenüber der Verzahnungsebene angeordnet sind. Es liegt auf der Hand, dass durch eine solche Stellung der Tragflächen von Zahnstange und Führungsrolle ein Verdrehen der Zahnstange in Umfangsrichtung verhindert ist.

Nachteilig bei einer solchen Zahnstangenlenkung ist die aufwendige Ausgestaltung der Tragflächen von Zahnstange und Führungsrolle. Zum einen ist die spanende Bearbeitung der Zahnstange aufwendig und damit teuer, weil ein erheblicher Materialanteil abzutragen ist. Zum anderen ist das Druckstück sehr kompliziert aufgebaut und damit ebenfalls kostenaufwendig. So müssen zwei Kugellager über je einen Bolzen im Druckstück untergebracht werden, was große Anforderungen an die Montage stellt und darüber hinaus auch zusätzlichen Bauraum beansprucht.

### Aufgabe der Erfindung

Ausgehend von den Nachteilen des bekannten Standes der Technik ist es daher Aufgabe der Erfindung, eine wesentlich vereinfachte Zahnstangenlenkung mit Druckstück bereit zu stellen, die sich einfacher fertigen lässt und Drehmomente, Radial- und Axialkräfte bei einer hohen Tragfähigkeit sicher aufnehmen kann.

### Zusammenfassung der Erfindung

Erfindungsgemäß wird diese Aufgabe nach dem kennzeichnenden Teil von Anspruch 1 in Verbindung mit dessen Oberbegriff dadurch gelöst, dass die Tragfläche als wenigstens eine innerhalb der Zahnstange liegende Ausnehmung ausgebildet ist. Im Sinne der Erfindung soll dabei verstanden werden, dass im unteren Teil der Zahnstange, also im Bereich der Führungsrolle, deren Kreislinie oder Peripherie nur sehr geringfügig unterbrochen ist.

Dabei ist von Vorteil, dass die als Tragfläche dienende Ausnehmung durch einen einfachen spangebenden Prozess, beispielsweise durch Fräsen, in die Zahnstange eingearbeitet werden kann. Das runde Querschnittsprofil der Zahnstange bleibt dabei im wesentlichen erhalten. Es ist also gemäß dem bisherigen Stand der Technik nicht mehr erforderlich, zur Herstellung der Tragfläche Unmengen von Material spanend abzutragen.

Weitere vorteilhafte Ausgestaltungen der Erfindung sind in den Unteransprüchen beschrieben.

So geht aus den Ansprüchen 2 und 3 hervor, dass die Tragfläche der Zahnstange halbkreisförmig oder V-förmig ausgebildet sein soll. Beide Ausführungsvarianten stehen gleichberechtigt nebeneinander und lassen sich aufgrund ihrer unkomplizierten geometrischen Querschnittsform auch in einfacher Weise in die Zahnstange einbringen.

Nach einem weiteren Merkmal der Erfindung gemäß Anspruch 4 ist vorgesehen, dass die Führungsrolle über ein von einer Tragachse aufgenommenes Nadellager im Druckstück drehbar gelagert ist. Nadellager sind standardisierte Zukaufteile, die sich in unterschiedlichsten Abmessungen kostengünstig erwerben lassen. Außerdem sind sie in der Lage, hohe Radialkräfte aufzunehmen und gewährleisten ein geräuschfreies Verhalten der Führungsrolle.

Aus den Ansprüchen 5 und 6 geht hervor, wie auftretende Axialkräfte sicher aufgenommen werden können. So ist nach Anspruch 5 vorgesehen, dass die Führungsrolle beidseitig in axialer Richtung von je einer Anlaufscheibe umgeben ist, während nach Anspruch 6 die Führungsrolle beidseitig in axialer Richtung von je einem Axiallager umgeben ist.

Nach einem weiterer Merkmal der Erfindung gemäß Anspruch 7 soll das Druckstück aus einem Kunststoff hergestellt sein, das sich durch Spritzgießen kostengünstig in unterschiedlichen Gestaltungsvarianten fertigen läßt. Eine derartige Ausbildung des Druckstückes weist zusätzliche Dämpfungseigenschaften aus, die sich auf den Lenkkomfort positiv auswirken.

Zur besseren Stabilisierung eines solchen Druckstückes aus Kunststoff, insbesondere bei hohen Temperaturen, ist nach Anspruch 8 vorgesehen, dass dieses wenigstens über einen Teilbereich seiner Mantelfläche von einer metallischen Hülse aufgenommen ist.

Schließlich geht aus Anspruch 9 hervor, dass das Druckstück ein die metallische Hülse in radialer Richtung überragenden Vorsprung aufweist. Auch dieser wirkt sich geräuschdämpfend aus, da in unmittelbarer Nähe zur fesselnd haltenden Stahlhülse eine Anlage aus einem reibarmen Kunststoff realisiert ist.

### Kurze Beschreibung der Zeichnungen

Die Erfindung wird an nachstehenden Ausführungsbeispielen näher erläutert. Es zeigen:
- Figur 1 und 2: einen Längsschnitt durch ein erfindungsgemäß ausgebildetes Druckstück mit Zahnstange und
- Figur 3: einen Längsschnitt durch ein Druckstück mit Zahnstange nach dem bisherigen Stand der Technik

### Ausführliche Beschreibung der Zeichnungen

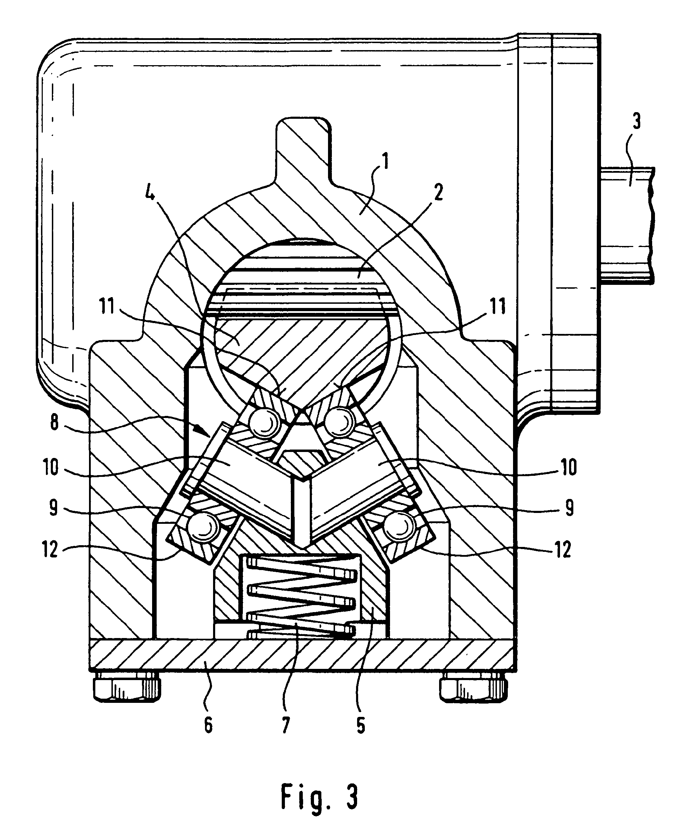

Zur Darstellung des Gesamtzusammenhanges sei zunächst auf dem Stand der Technik gemäß Figur 3 verwiesen. Diese zeigt ein Gehäuse 1, in dem ein Ritzel 2, das in eine Lenkspindel 3 übergeht, gelagert ist. In die Verzahnung des Ritzels 2 greift die Verzahnung einer Zahnstange 4 ein, die quer zum Ritzel 2 verläuft. Auf der der Eingriffsseite des Ritzels 2 mit der Zahnstange 4 gegenüberliegenden Seite der Zahnstange 4 ist ein Druckstück 5 angeordnet, das die vom Ritzel 2 auf die Zahnstange 4 übertragene Kraft im wesentlichen abstützt. Das Druckstück 5 ist in einer nicht bezeichneten Aufnahmebohrung des Gehäuses 1 untergebracht. Es wird von einer zwischen dem Druckstück 5 und einem starr mit dem Gehäuse 1 verbundenen Deckel 6 angeordneten Feder 7 in Richtung auf die Zahnstange 4 vorgespannt.

Im Druckstück 5 ist eine Führungsrolle 8 untergebracht, die aus zwei als Rillenkugellager ausgebildeten Wälzlagern 9 besteht, die auf je einer Tragachse 10 gehalten sind. Die Tragachsen 10 und damit die Wälzlager 9 sind unter einem bestimmten Winkel zur Verzahnungsebene angeordnet, so dass die schräg gestellten Lageraußenringe der Wälzlager 9 mit ihren Tragflächen 12 an den mit 11 bezeichneten Tragflächen der Zahnstange 4 anliegen. Es liegt auf der Hand, dass sich die Zahnstange 4 in Umfangsrichtung nicht bewegen kann, falls ein Drehmoment, beispielsweise durch einen Kugelgewindetrieb, aufgebracht wird.

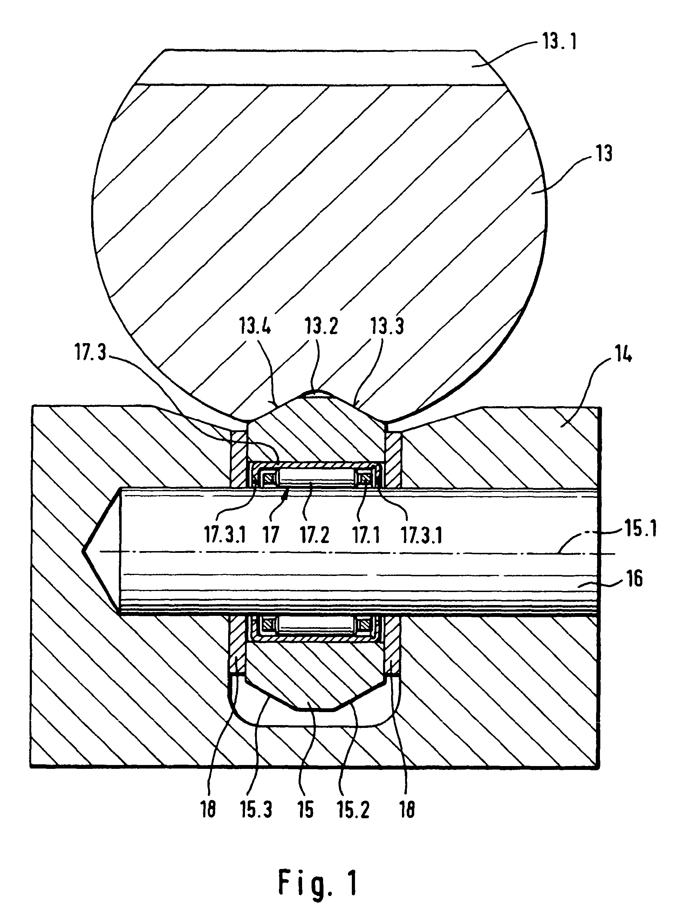

In Figur 1 ist eine Anordnung von einem erfindungsgemäßen Druckstück 14 und einer Zahnstange 13 gezeigt, wobei nach dem bekanntem Stand der Technik die Zahnstange 13 an ihrer vom Druckstück 14 abgewandten Seite mit einer Verzahnung 13.1 versehen ist, in die ein nicht dargestelltes Ritzel eingreift. An ihrer der Verzahnung 13.1 gegenüberliegenden Seite weist die Zahnstange 13 eine Ausnehmung 13.2 auf, die im Ausführungsbeispiel V-förmig ausgestaltet ist, so dass zwei Tragflächen 13.3, 13.4 gebildet sind, die symmetrisch zur Verzahnungsebene 13.1 geneigt sind. Im Druckstück 14 ist auf einer Tagachse 16 eine Führungsrolle 15 über ein Nadellager 17 drehbar gehalten. Die Führungsrolle 5 ist als ein rotationssymmetrischer Körper ausgebildet, der ebenfalls zu seiner Rotationsachse 15.1 symmetrisch zueinander geneigte Tragflächen 15.2, 15.3 aufweist. Anders ausgedrückt, die Führungsrolle 15 ist im Längsschnitt gesehen hausartig ausgestaltet, wobei das Dach in die V-förmige Ausnehmung 13.2 der Zahnstange 13 eingreift. Das Axialnadellager 17 besteht aus in einem Käfig 17.1 geführten Lagernadeln 17.2, die von einer Nadelhülse 17.3 aufgenommen sind, welche mit radial einwärts gerichteten Borden 17.3.1 versehen ist. Schließlich gehört zum Nadellager 17 noch je eine Anlaufscheibe 18, die rechts- und linksseitig angeordnet sind und der Abstützung axialer Kräfte dienen.

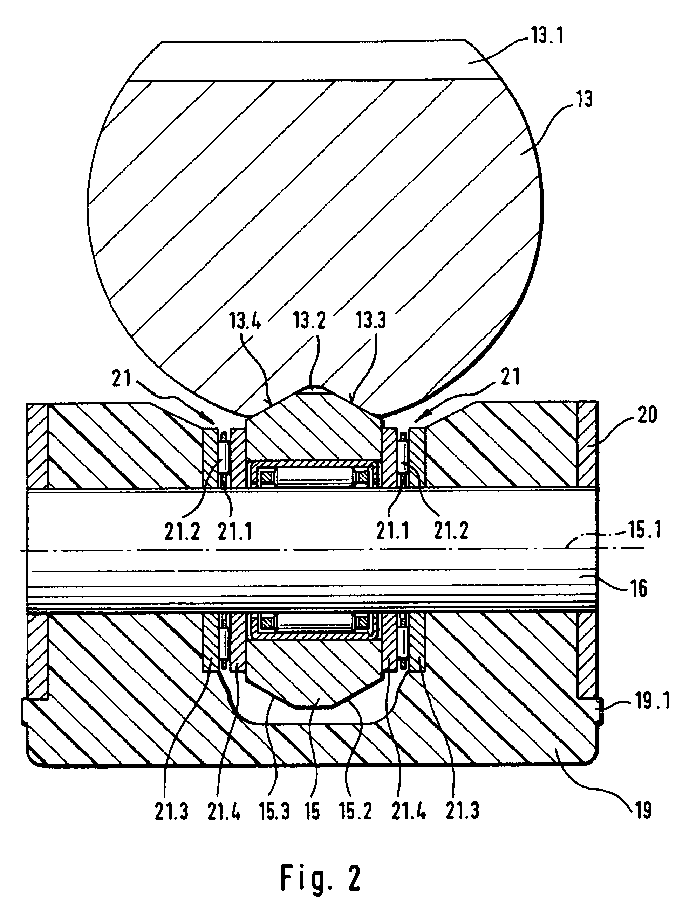

Das in Figur 2 gezeigte Druckstück 19 unterscheidet sich von dem in Figur 1 dadurch, dass es aus einem Kunststoff hergestellt ist. Zur besseren Formbeständigkeit ist das Druckstück 19 wenigstens über einen Teilbereich seiner Mantelfläche von einer metallischen Hülse 20 umschlossen, wobei der Kunststoffkörper einen radial nach außen gerichteten Vorsprung 19.1 aufweist, auf dem die Hülse 20 aufgesetzt ist. Ein weiterer wesentlicher Unterschied liegt darin, dass die Führungsrolle 15 zur Aufnahme von auftretenden Axialkräften von je einem Axiallager 21 abgestützt wird, dessen in einem Käfig 21.1 geführte Lagernadeln 21.2 zwischen den beiden zugehörigen Laufscheiben 21.3, 21.4 abrollen, wobei die Laufscheibe 21.3 fest im Kunststoffkörper des Druckstückes 19 angeordnet ist und die zugehörige andere Laufscheibe 21.4 mit der Führungsrolle 15 rotiert.

In beiden Figuren ist eine aus Druckstück 14, 19 und Zahnstange 13 bestehende Einheit dargestellt, die sich durch folgende Vorteile auszeichnet:
- kostengünstige Herstellung und Montage,
- geringe Verlustreibung und hohe Laufruhe,
- sichere Aufnahme von axialen- und radialen Kräften und von einwirkenden Drehmomenten,
- hohe Tragfähigkeit.

### Bezugszahlenliste

- 1: Gehäuse
- 2: Ritzel
- 3: Lenkspindel
- 4: Zahnstange
- 5: Druckstück
- 6: Deckel
- 7: Feder
- 8: Führungsrolle
- 9: Wälzlager
- 10: Tragachse
- 11: Tragfläche
- 12: Tragfläche
- 13: Zahnstange
- 13.1: Verzahnung
- 13.2: Ausnehmung
- 13.3: Tragfläche
- 13.4: Tragfläche
- 14: Druckstück
- 15: Führungsrolle
- 15.1: Rotationsachse
- 15.2: Tragfläche
- 15.3: Tragfläche
- 16: Tragachse
- 17: Nadellager
- 16.1: Käfig
- 16.2: Lagernadel
- 16.3: Nadelhülse
- 16.3.1: Bord
- 17: Anlaufscheibe
- 18: Druckstück
- 18.1: Vorsprung
- 19: Hülse
- 20: Axiallager
- 20.1: Käfig
- 20.2: Lagernadel
- 20.3: Laufscheibe
- 20.4: Laufscheibe

## Patentansprüche

1. Zahnstangenlenkung für ein Kraftfahrzeug, mit einem Lenkgehäuse (1), in dem eine Zahnstange (13) längsverschieblich gelagert ist, sowie einem mit der Zahnstange (13) kämmenden Ritzel (2) und einem Druckstück (14, 19), das auf einer einer Eingriffsseite mit dem Ritzel (2) gegenüberliegenden Seite der Zahnstange (13) angeordnet ist und mit Hilfe einer Feder (7) gegen die Zahnstange (13) vorgespannt ist, wobei das Druckstück in (14,19) seinem Inneren eine der Kontur der Zahnstange (13) angepaßte, drehbare Führungsrolle (15) mit einer Tragfläche aufweist, an der die Zahnstange (13) mit einer korrespondierenden Tragfläche anliegt, wobei die Tragflächen so zueinander angeordnet sind, dass ein Verdrehen der Zahnstange (13) in Umfangsrichtung verhindert ist, **dadurch gekennzeichnet, dass** die Tragfläche als wenigstens eine innerhalb der Zahnstange (13) liegende Ausnehmung (13.2) ausgebildet ist.

2. Zahnstangelenkung nach Anspruch 1, **dadurch gekennzeichnet, dass** die Ausnehmung (13.2) der Zahnstange (13) halbkreisförmig ausgebildet ist.

3. Zahnstangelenkung nach Anspruch 1, **dadurch gekennzeichnet, dass** die Ausnehmung (13.2) der Zahnstange (13) V-förmig ausgebildet ist.

4. Zahnstangenlenkung nach Anspruch 1, **dadurch gekennzeichnet, dass** die Führungsrolle (15) über ein von einer Tragachse (16) aufgenommenes Nadellager (17) im Druckstück (14) drehbar gelagert ist.

5. Zahnstangenlenkung nach Anspruch 4, **dadurch gekennzeichnet, dass** die Führungsrolle (15) beidseitig in axialer Richtung von je einer Anlaufscheibe (18) umgeben ist.

6. Zahnstangenlenkung nach Anspruch 4, **dadurch gekennzeichnet, dass** die Führungsrolle (15) beidseitig in axialer Richtung von je einem Axiallager (21) umgeben ist.

7. Zahnstangenlenkung nach Anspruch 1, **dadurch gekennzeichnet, dass** das Druckstück (19) aus einem Kunststoff hergestellt ist.

8. Zahnstangenlenkung nach Anspruch 7, **dadurch gekennzeichnet, dass** das Druckstück (19) wenigstens über einen Teilbereich seiner Mantelfläche von einer metallischen Hülse (20) aufgenommen ist.

9. Zahnstangenlenkung nach Anspruch 8, **dadurch gekennzeichnet, dass** das Druckstück (19) ein die metallische Hülse (20) in radialer Richtung überragenden Vorsprung (19.1) aufweist.

## Claims

1. Rack-and-pinion steering gear for a motor vehicle, comprising a steering rack housing (1) in which a steering rack (13) is mounted in a longitudinally displaceable manner, a pinion (2) meshing with the steering rack (13) and a rack yoke (14, 19) which is arranged on a side of the steering rack (13) disposed opposite a side thereof which engages with the pinion (2), and which is preloaded against the steering rack (13) by means of a spring (7), the rack yoke (14, 19) having in its interior a rotatable guide roller (15) which is adapted to the contour of the steering rack (13) and has a bearing surface against which a corresponding bearing surface of the steering rack (13) abuts, and the bearing surfaces being so arranged with respect to one another that rotation of the steering rack (13) in the circumferential direction is prevented, **characterised in that** the bearing surface is configured as at least one recess (13.2) located in the steering rack (13).

2. Rack-and-pinion steering gear according to Claim 1, **characterised in that** the recess (13.2) of the steering rack (13) has a semicircular configuration.

3. Rack-and-pinion steering gear according to Claim 1, **characterised in that** the recess (13.2) of the steering rack (13) has a V-shaped configuration.

4. Rack-and-pinion steering gear according to Claim 1, **characterised in that** in the rack yoke (14) the guide roller (15) is mounted rotatably via a needle roller bearing (17) received by a support spindle (16).

5. Rack-and-pinion steering gear according to Claim 4, **characterised in that** the guide roller (15) is flanked in the axial direction by a thrust washer (18) on each side.

6. Rack-and-pinion steering gear according to Claim 4, **characterised in that** the guide roller (15) is flanked in the axial direction by a thrust bearing (21) on each side.

7. Rack-and-pinion steering gear according to Claim 1, **characterised in that** the rack yoke (19) is made of a plastics material.

8. Rack-and-pinion steering gear according to Claim 7, **characterised in that** the rack yoke (19) is housed in a metallic casing (20) over at least a partial area of its lateral surface.

9. Rack-and-pinion steering gear according to Claim 8, **characterised in that** the rack yoke (19) has a projection (19.1) extending beyond the metallic casing (20) in a radial direction.

## Revendications

1. Direction à crémaillère pour un véhicule automobile, comportant un boîtier de direction (1), dans lequel une crémaillère (13) est logée de façon à se déplacer longitudinalement, ainsi qu'un pignon (2) s'engrenant avec la crémaillère (13) et une pièce de pression (14, 19), laquelle est disposée d'un côté de la crémaillère (13) opposé au côté d'engrènement avec le pignon (2) et est précontrainte contre la crémaillère (13) au moyen d'un ressort (7), l'intérieur de la pièce de pression (14, 19) présentant un galet de guidage (15) capable de tourner, adapté au contour de la crémaillère (13), comportant une surface d'appui, sur laquelle repose la crémaillère (13) avec une surface d'appui correspondante, les surfaces d'appui étant disposées l'une par rapport à l'autre de telle sorte qu'une rotation de la crémaillère (13) soit empêchée dans le sens circonférentiel, **caractérisé en ce que** la surface d'appui est conformée en tant qu'au moins un évidement (13.2) situé à l'intérieur de la crémaillère (13).

2. Direction à crémaillère selon la revendication 1, **caractérisée en ce que** l'évidement (13.2) de la crémaillère (13) est conformé de façon semi-circulaire.

3. Direction à crémaillère selon la revendication 1, **caractérisée en ce que** l'évidement (13.2) de la crémaillère (13) est conformé en V.

4. Direction à crémaillère selon la revendication 1, **caractérisée en ce que** le galet de guidage (15) est logé de façon à pouvoir tourner dans la pièce de pression (14) par l'intermédiaire d'un roulement à aiguilles (17) monté sur un arbre porteur (16).

5. Direction à crémaillère selon la revendication 4, **caractérisée en ce que** le galet de guidage (15) est entouré de chaque côté dans le sens axial par un disque de roulement (18).

6. Direction à crémaillère selon la revendication 4, **caractérisée en ce que** le galet de guidage (15) est entouré de chaque côté dans le sens axial par un palier à roulement axial (21).

7. Direction à crémaillère selon la revendication 1, **caractérisée en ce que** la pièce de pression (19) est fabriquée à partir d'une matière synthétique.

8. Direction à crémaillère selon la revendication 7, **caractérisée en ce que** la pièce de pression (19) est logée dans une douille métallique (20) au moins dans une zone partielle de sa surface d'enveloppe.

9. Direction à crémaillère selon la revendication 8, **caractérisée en ce que** la pièce de pression (19) présente une partie en saillie (19.1) dépassant dans le sens radial la douille métallique (20).
